# EUROPEAN PATENT SPECIFICATION

(11) **EP 3 517 572 B1**
(45) Date of publication and mention of the grant of the patent: **27.01.2021**
(21) Application number: 18208364.2
(22) Date of filing: 26.11.2018
(51) Int. Cl.: C08L 75/04, C08G 18/83, B66B 7/06

(54) **LOAD BEARING TRACTION MEMBERS AND METHOD**
LASTTRAGENDE TRAKTIONSELEMENTE UND VERFAHREN
ÉLÉMENTS DE TRACTION PORTEURS DE CHARGE ET PROCÉDÉ ASSOCIÉ

(30) Priority: 30.11.2017 US 201762592827 P
(43) Date of publication of application: 31.07.2019
(60) Divisional application: 20215214.6
(73) Proprietor: Otis Elevator Company, Farmington, Connecticut 06032 (US)
(72) Inventor: ZHAO, Chen Qian, Farmington, CT Connecticut 06032 (US)
(74) Representative: Dehns

(56) References cited:
- WO-A1-2010/072690
- US-A- 5 532 058
- US-A1- 2011 259 677

## Description

### BACKGROUND

Exemplary embodiments pertain to the field of load-bearing traction members such as for elevator systems.

Load-bearing members can be used in a wide variety of mechanical equipment and processes. One example of a use for load-bearing members is in transportation such as for elevator or escalator systems. Elevator systems typically include a cab and a counterweight that move within a hoistway to transport passengers or cargo to different landings within a building. A load-bearing member such as a cable or belt connects the cab and counterweight, and during operation the load-bearing moves over one or more sheaves mounted to the building structure as the cab and counterweight move to different positions.

A common configuration for load-bearing members includes a tension member core such as one or more steel cords and a polymer jacket disposed around the core. The cords act as the load supporting tension member, while the jacket holds the cords in a stable position relative to each other, and provides a frictional load path to provide traction for driving the belt. During operation of systems with load-bearing members, a surface of the load-bearing member may be in contact with another system component such as a sheave in an elevator system, and the friction characteristics between the load-bearing member surface and other system components can affect the load-bearing system performance.

WO 2010/072690 A1 discloses a load-bearing member of an elevator system comprising a tension member embedded in a polymer jacket that can consist of polyurethane, epoxy, or a combination thereof.

### BRIEF DESCRIPTION

Disclosed is a method of making a load-bearing traction member (e.g. as described herein). According to the method, a composition comprising a thermoplastic polyurethane and a compound comprising a plurality of groups having the formula 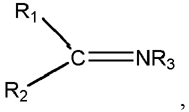 wherein R₁ and R₂ are each groups in a polymer backbone or together form a group having the formula =NR₄, wherein R₃ and R₄ each independently represents an organic group, is heated, e.g. to a fluid state (e.g. to form a fluid composition), and applied to at least one tension member, and solidified to form a polymer jacket around at least one tension member.

Also disclosed is a load bearing traction member (e.g. made by the method described herein), comprising one or more tension members, and a polymer jacket. The polymer jacket comprises the reaction product of a composition comprising a thermoplastic polyurethane and a compound comprising a plurality of groups having the formula 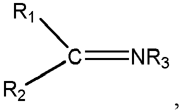 wherein R₁ and R₂ are each groups in a polymer backbone or together form a group having the formula =NR₄, wherein R₃ and R₄ each independently represents an organic group.

Also disclosed is an elevator system comprising the above-described load bearing traction member.

In some embodiments, R₁ and R₂ are each polymer backbone groups.

In some embodiments, R₁ and R₂ together form a group having the formula =NR₄.

In any one or combination of the foregoing embodiments, the composition comprises 0.1-5.0 wt.% of the compound comprising a plurality of groups having the formula

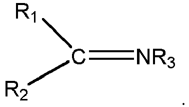

In any one or combination of the foregoing embodiments, the composition further comprises a compound comprising a plurality of epoxide groups.

In any one or combination of the foregoing embodiments, wherein the composition comprises 0.05-10.00 wt.% of the compound comprising a plurality of epoxide groups.

In any one or combination of the foregoing embodiments, the composition further comprises a catalyst.

In any one or combination of the foregoing embodiments, the composition is heated to a temperature of at least 150°C.

In any one or combination of the foregoing embodiments, the composition is heated to a temperature of less than 250°C.

### BRIEF DESCRIPTION OF THE DRAWINGS

The following descriptions should not be considered limiting in any way. With reference to the accompanying drawings, like elements are numbered alike:
FIG. 1A is a schematic view of an example embodiment of a traction elevator system;
FIG. 1B is a schematic view of another example embodiment of a traction elevator system;
FIG. 1C is a schematic view of yet another example embodiment of a traction elevator system;
FIG. 2 is a schematic cross-sectional view of an example embodiment of a belt for a traction elevator system before surface treatment; and
FIG. 3 is a schematic view of a system for making a traction member as described herein.

### DETAILED DESCRIPTION

A detailed description of one or more embodiments of the disclosed apparatus and method are presented herein by way of exemplification and not limitation with reference to the Figures.

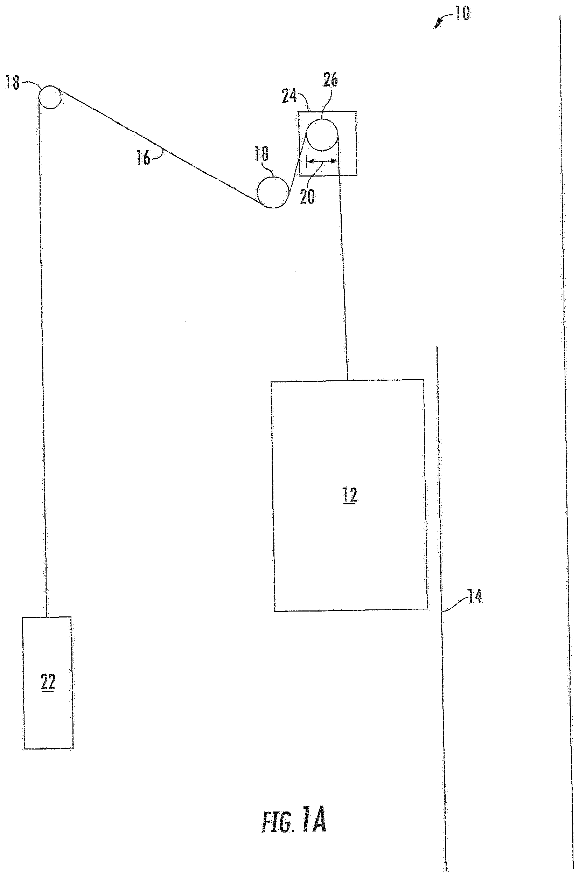

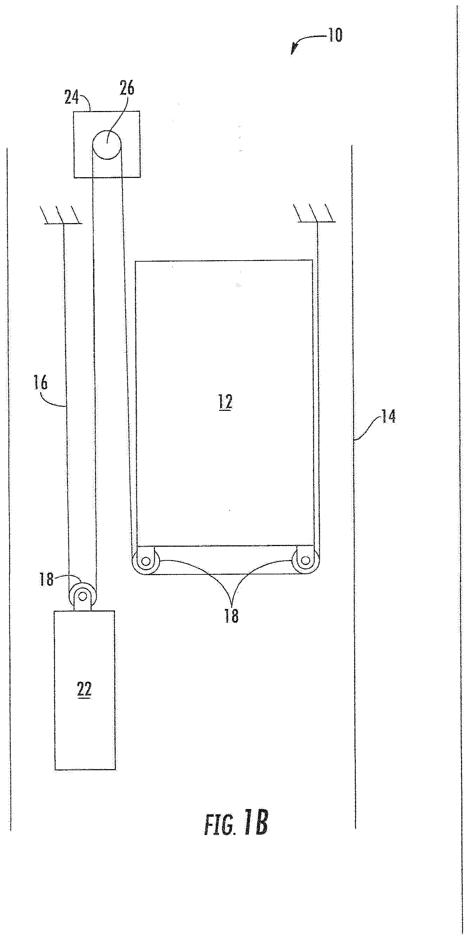

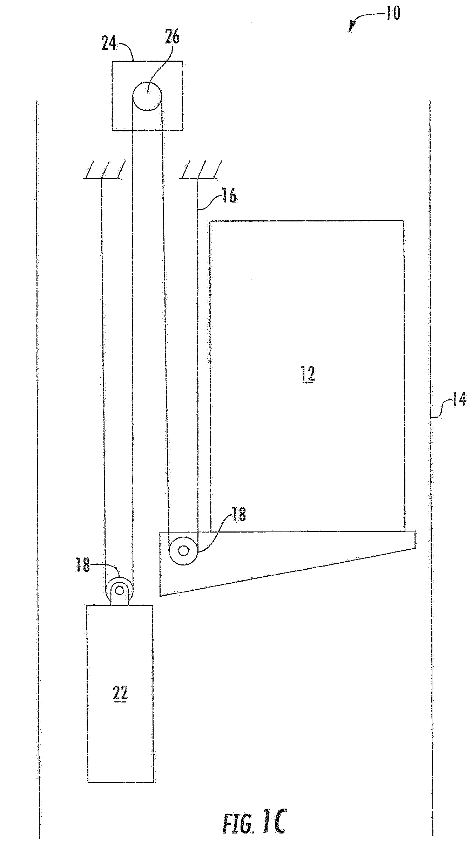

Shown in FIGS. 1A, 1B and 1C are schematics of exemplary traction elevator systems 10. Features of the elevator system 10 that are not required for an understanding of the present invention (such as the guide rails, safeties, etc.) are not discussed herein. The elevator system 10 includes an elevator car 12 operatively suspended or supported in a hoistway 14 with one or more belts 16. The one or more belts 16 interact with one or more sheaves 18 to be routed around various components of the elevator system 10. The one or more belts 16 could also be connected to a counterweight 22, which is used to help balance the elevator system 10 and reduce the difference in belt tension on both sides of the traction sheave during operation.

The sheaves 18 each have a diameter 20, which may be the same or different than the diameters of the other sheaves 18 in the elevator system 10. At least one of the sheaves could be a drive sheave 26. The drive sheave 26 is driven by a machine 24. Movement of the drive sheave 26 by the machine 24 drives, moves and/or propels (through traction) the one or more belts 16 that are routed around the drive sheave 26. At least one of the sheaves 18 could be a diverter, deflector or idler sheave 18. Diverter, deflector or idler sheaves 18 are not driven by the machine 24, but help guide the one or more belts 16 around the various components of the elevator system 10.

In some embodiments, the elevator system 10 could use two or more belts 16 for suspending and/or driving the elevator car 12. In addition, the elevator system 10 could have various configurations such that either both sides of the one or more belts 16 engage the one or more sheaves 18 (such as shown in the exemplary elevator systems in FIGS. 1A, 1B or 1C) or only one side of the one or more belts 16 engages the one or more sheaves 18.

FIG 1A provides a 1:1 roping arrangement in which the one or more belts 16 terminate at the car 12 and counterweight 22. FIGS. 1B and 1C provide different roping arrangements. Specifically, FIGS. 1B and 1C show that the car 12 and/or the counterweight 22 can have one or more sheaves 18 thereon engaging the one or more belts 16 and the one or more belts 16 can terminate elsewhere, typically at a structure within the hoistway 14 (such as for a machine room-less elevator system) or within the machine room (for elevator systems utilizing a machine room. The number of sheaves 18 used in the arrangement determines the specific roping ratio (e.g. the 2:1 roping ratio shown in FIGS. 1B and 1C or a different ratio). One skilled in the art will readily appreciate that the configurations of the present disclosure could be used on elevator systems other than the exemplary types shown in FIGS. 1A, 1B, and 1C.

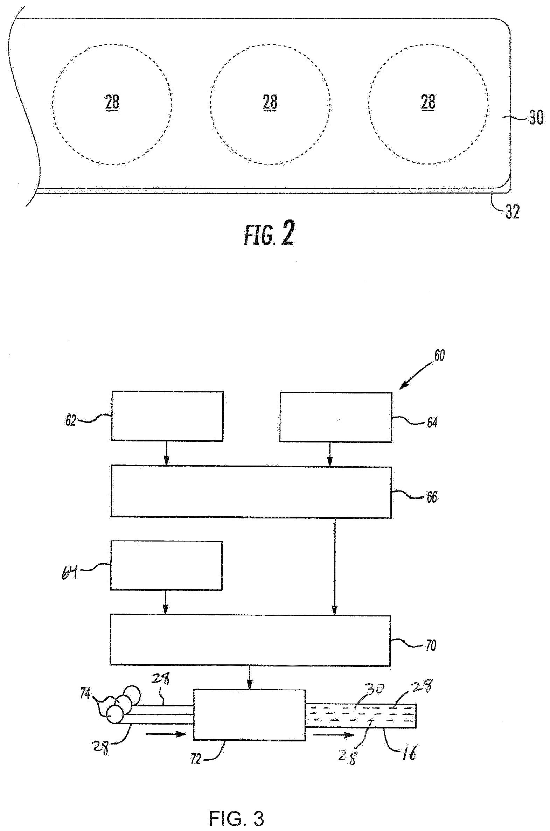

Referring to FIG. 2, a cross-sectional view of an exemplary belt 16 is shown. The belt 16 is constructed of one or more tension member cords 28 in a jacket 30. The cords 28 of the belt 16 may all be identical, or some or all of the cords 28 used in the belt 16 could be different than the other cords 28. For example, one or more of the cords 28 could have a different construction, formed from different materials, or size than the other cords 28. As seen in FIG. 2, the belt 16 has an aspect ratio greater than one (i.e. belt width is greater than belt thickness). In some embodiments, each cord 28 comprises a plurality of wires such as steel wires, which in some embodiments are formed into strands 34, which are then formed into the cord 28. The belt 16 can be constructed to have sufficient flexibility when passing over the one or more sheaves 18 to provide low bending stresses, meet belt life requirements and have smooth operation, while being sufficiently strong to be capable of meeting strength requirements for suspending and/or driving the elevator car 12. The jacket 30 can substantially retain the cords 28 therein. The phrase substantially retain means that the jacket 30 has sufficient engagement with the cords 28 such that the cords 28 do not pull out of, detach from, and/or cut through the jacket 30 during the application on the belt 16 of a load that can be encountered during use in an elevator system 10 with, potentially, an additional factor of safety. In other words, the cords 28 remain at their original positions relative to the jacket 30 during use in an elevator system 10. The jacket 30 can completely envelop the cords 28 (such as shown in FIG. 2), substantially envelop the cords 28, or at least partially envelop the cords 28.

As mentioned above, the jacket 30 can be formed from a polymer composition that is applied in a fluid state to the cords 28 and solidified. The polymer composition comprises a thermoplastic polyurethane (TPU) as a base polymer material. TPU can be prepared from a polyaddition reaction of diisocyanates and long-chain and short-chain polyols. Various commercially-available TPU compositions can provide targeted properties including but not limited to hardness, elasticity, tensile strength, torsion modulus, tear strength, creep performance, dependence of any of the above or other properties on temperature (e.g., heat-resistance). Blends of different TPU's can be used to achieve targeted performance parameters. In some embodiments, the TPU can be characterized by a hardness of at least 75 Shore A, according to according to DIN ISO 7619-1 (3s).

The polymer composition further comprises a compound comprising a plurality of groups having the formula 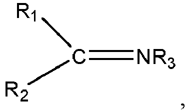 wherein R₁ and R₂ are each groups in a polymer backbone or together form a group having the formula =NR₄, wherein R₃ and R₄ each independently represents an organic group. The polymer composition may further comprise a compound comprising a plurality of epoxide groups. Regarding compounds with a plurality of epoxide groups (i.e., polyepoxides), in some embodiments, the compound includes an n-functional polyepoxide (i.e., average number of epoxide groups per molecule) in which n can be a number from 2 to 8000, more specifically from 20 to 6000, and even more specifically from 200 to 4000. Examples of compounds comprising a plurality of epoxide groups include, but are not limited to epoxide derivatives of diols, triols, and other polyols such as bisphenol A diglycidyl ether, epoxide-terminated polyether pre-polymers or polymers (which can be produced by a ring opening reaction of the aforementioned epoxide groups). In some embodiments, the/a polyepoxide can have the formula

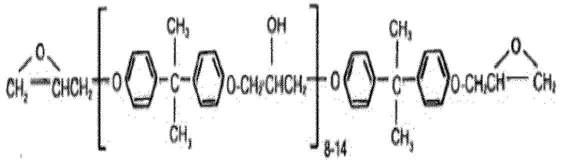

Other examples of polyepoxides include oligomers or polymers having a plurality of epoxide groups appended to an oligomer or polymer backbone such as acrylic oligomers or polymer including pendant epoxide groups, e.g., polyglycidyl methacrylate copolymers produced by an addition polymerization reaction of a monomer mixture comprising glycidyl methacrylate along with other (meth)acrylate monomers and optionally other addition polymerizable monomers.

Compounds having the formula 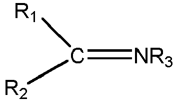 include carbodiimides and polymeric carbodiimides. Examples of carbodiimides (i.e., compounds in which R₁ and R₂ together represent the group =NR₄, so that the compound has the formula R₄N=C=NR₃) include but are not limited to dicyclohexylcarbodiimide (DCC), N,N'-isopropylcarbodiimide (DIC), or *N*-(3-Dimethylaminopropyl)-*N*'-ethylcarbodiimide.

Polymeric carbodiimides represent compounds in which R₁ and R₂ each represents a group on a polymer backbone adjacent to the imido carbon ("C" in the above formula) that is also on the backbone. Polymeric carbodiimides are characterized by repeat units having the formula 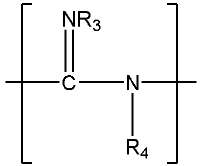 and can be prepared by catalyzed living polymerization of the carbodiimides using titanium (IV) catalysts or other catalysts such as copper, nickel, or zirconium catalysts.

In some embodiments, the polymer composition can optionally include additional reactive components, including but not limited to polyols (e.g., diol chain extenders or higher functionality alcohol crosslinkers) or polyamines (e.g., diamine chain extenders or higher functionality amine crosslinkers) or blocked or unblocked polyisocyanates. Diols include ethylene glycol, propylene glycol, butylene glycol, 1,4-butanediol, butenediol, butynediol, xylylene glycols, amylene glycols, 1,4-phenylene-bis-beta-hydroxy ethyl ether, 1,3-phenylene-bis-beta-hydroxy ethyl ether, bis-(hydroxy-methyl-cyclohexane), hexanediol, and thiodiglycol; diamines including ethylene diamine, propylene diamine, butylene diamine, hexamethylene diamine, cyclohexylene diamine, phenylene diamine, tolylene diamine, xylylene diamine, 3,3'-dichlorobenzidine, and 3,3'-dinitrobenzidine; alkanol amines including ethanol amine, aminopropyl alcohol, 2,2-dimethyl propanol amine, 3-aminocyclohexyl alcohol, and p-aminobenzyl alcohol; and combinations of any of the aforementioned chain extenders. Higher molecular weight reactive components such as polyester polyols or polyether polyols can also be included. Polyester polyols can be produced from a reaction of a dicarboxylic acid and a glycol having at least one primary hydroxyl group. Dicarboxylic acids include but are not limited to adipic acid, methyl adipic acid, succinic acid, suberic acid, sebacic acid, oxalic acid, glutaric acid, pimelic acid, azelaic acid, phthalic acid, terephthalic acid, or isophthalic acid, and combinations thereof. Glycols for use in producing the polyester polyols include but are not limited to ethylene glycol, butylene glycol, hexanediol, bis(hydroxymethylcyclohexane), 1,4-butanediol, diethylene glycol, 2,2-dimethyl propylene glycol, or 1,3-propylene glycol. Polyether polyols include but are not limited to polytetramethylene glycol, polyethylene glycol, or polypropylene glycol.

In some example embodiments, technical effects can be achieved such as good mechanical properties and good hydrolytic stability. Unlike 2K systems that require special handling and continuous metering for iscosyanate crosslinkers, compositions disclosed herein can be used to produce load bearing traction members using conventional extrusion or molding equipment using large stable master batch materials.

The relative amounts of the compound with a plurality of epoxide groups and/or the carbodiimide or polymeric carbodiimide can be varied by the skilled person to achieve targeted properties or results. In some embodiments, the compound with a plurality of epoxide groups can be present in the heated TPU composition at a level of up to 10 wt.% (i.e., present in amount greater than zero and less than or equal to 10 wt.% based on the total weight of the composition). In some embodiments, the compound with a plurality of epoxide groups can be present at a level of 0.05 wt.% to 10 wt.%. In some embodiments, the carbodiimide or polymeric carbodiimide can be present in the heated TPU composition at a level of up to 5 wt.% (i.e., present in amount greater than zero and less than or equal to 5 wt.% based on the total weight of the composition). In some embodiments, the compound with a plurality of epoxide groups can be present at a level of 0.1 wt.% to 5 wt.%. The remainder of the composition is primarily the TPU, although other materials can be present, including but not limited to blend polymers, flame retardants, friction additives, adhesion promoters, mold release agents, antioxidants or other stabilizers.

Referring to FIG. 3, there is shown a process 60 of making a load-bearing traction member such as an elevator load-bearing belt. A compound with a plurality of blocked isocyanate groups 62 (and other components such as diamine and/or diol) is mixed with a supply of base TPU resin 64 in a master batch mixer 66. Additional base TPU resin 64 (or a different TPU resin) is mixed with the master batch from master batch mixer 66 in a jacket composition mixer 70. The jacket is formed in a jacket forming station 72 such as an extruder or molding device to provide the desired geometry of the jacket. In the illustrated example, a plurality of spools 74 supply tension members 28 to the jacket forming station 72 where the jacket 30 is applied onto at least one exterior surface of the tension members 28 to form the load-bearing traction member 32 resulting in the desired assembly. In some embodiments, the jacket-forming mixer 70 can be integrated as one or more heating and mixing stages with the jacket forming station 72 such as with a screw extruder. The jacket composition comprising TPU and the epoxy functional compound and other optional components is heated to a temperature high enough to heat the TPU and functional additives to a fluid state. In some embodiments, the composition temperature can be in a range having a lower end of 150°C, 170°C, or 190°C, and an upper end of 200°C, 230°C, or 250°C. These range limits can be independently combined to produce a number of ranges, and each possible range is hereby expressly disclosed. After emergence from the jacket forming station 72, the load bearing traction member can be cooled (e.g., with water or air), cleaned, and processed for assembly into a traction apparatus.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Unless otherwise stated, the term "or" means "and/or". It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of making a load-bearing traction member, comprising heating a composition comprising a thermoplastic polyurethane, and a compound comprising a plurality of groups having the formula 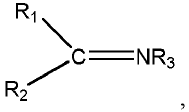 wherein R₁ and R₂ are each groups in a polymer backbone or together form a group having the formula =NR₄, wherein R₃ and R₄ each independently represents an organic group; and
applying the composition to at least one tension member, and solidifying the composition to form a polymer jacket around the at least one tension member.

2. The method of claim 1, wherein the composition comprises 0.1-5.0 wt.% of the compound comprising a plurality of groups having the formula

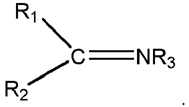

3. The method of claim 1 or claim 2, wherein the composition further comprises a compound comprising a plurality of epoxide groups.

4. The method of claim 3, wherein the composition comprises 0.05-10.00 wt.% of the compound comprising a plurality of epoxide groups.

5. The method of any preceding claim, wherein the composition further comprises a catalyst.

6. The method of any preceding claim, wherein the composition is heated to a temperature of at least 150°C.

7. The method of any preceding claim, wherein the composition is heated to a temperature of less than 250°C.

8. A load bearing traction member, comprising one or more tension members; and
a polymer jacket comprising the reaction product of a composition comprising a thermoplastic polyurethane and a compound comprising a plurality of groups having the formula 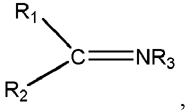 wherein R₁ and R₂ are each groups in a polymer backbone or together form a group having the formula =NR₄, wherein R₃ and R₄ each independently represents an organic group.

9. The load bearing traction member of claim 8, wherein the composition comprises 0.1-5.0 wt.% of the compound comprising a plurality of groups having the formula

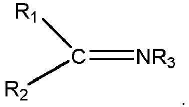

10. The load bearing traction member of claim 8 or claim 9, wherein the composition further comprises a compound comprising a plurality of epoxide groups.

11. The load bearing traction member of claim 10, wherein the composition comprises 0.05-10.00 wt.% of the compound comprising a plurality of epoxide groups.

12. The load bearing traction member of any one of claims 8-11, wherein the composition further comprises a catalyst.

13. An elevator system comprising the load bearing traction member of any one of claims 8-12.

## Patentansprüche

1. Verfahren zum Herstellen eines lasttragenden Traktionselements, umfassend:
Erhitzen einer Zusammensetzung, die ein thermoplastisches Polyurethan umfasst, und einer Verbindung, die eine Vielzahl von Gruppen umfasst, die die Formel 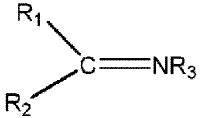 aufweist, wobei R₁ und R₂ jeweils Gruppen in einem Polymerrückgrat sind oder zusammen eine Gruppe ausbilden, die die Formel =NR₄ aufweist, wobei R₃ und R₄ jeweils unabhängig für eine organische Gruppe stehen; und
Aufbringen der Zusammensetzung auf mindestens ein Spannelement und Verfestigen der Zusammensetzung, um einen Polymermantel um das mindestens eine Spannelement auszubilden.

2. Verfahren nach Anspruch 1, wobei die Zusammensetzung 0,1-5,0 Gew.-% der Verbindung umfasst, die eine Vielzahl von Gruppen umfasst, die die Formel 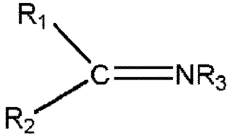 aufweist.

3. Verfahren nach Anspruch 1 oder Anspruch 2, wobei die Zusammensetzung ferner eine Verbindung umfasst, die eine Vielzahl von Epoxid-Gruppen umfasst.

4. Verfahren nach Anspruch 3, wobei die Zusammensetzung 0,05-10,00 Gew.-% der Verbindung umfasst, die eine Vielzahl von Epoxid-Gruppen umfasst.

5. Verfahren nach einem der vorhergehenden Ansprüche, wobei die Zusammensetzung ferner einen Katalysator umfasst.

6. Verfahren nach einem der vorhergehenden Ansprüche, wobei die Zusammensetzung auf eine Temperatur von mindestens 150 °C erhitzt wird.

7. Verfahren nach einem der vorhergehenden Ansprüche, wobei die Zusammensetzung auf eine Temperatur von weniger als 250 °C erhitzt wird.

8. Lasttragendes Traktionselement, umfassend:
ein oder mehrere Spannelemente; und
einen Polymermantel, der das Reaktionsprodukt einer Zusammensetzung umfasst, die ein thermoplastisches Polyurethan und eine Verbindung umfasst, die eine Vielzahl von Gruppen umfasst, die die Formel 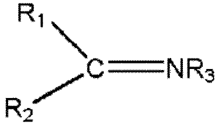 aufweist, wobei R₁ und R₂ jeweils Gruppen in einem Polymerrückgrat sind oder zusammen eine Gruppe ausbilden, die die Formel =NR₄ aufweist, wobei R₃ und R₄ jeweils unabhängig für eine organische Gruppe stehen.

9. Lasttragendes Traktionselement nach Anspruch 8, wobei die Zusammensetzung 0,1-5,0 Gew.-% der Verbindung umfasst, die eine Vielzahl von Gruppen umfasst, die die Formel 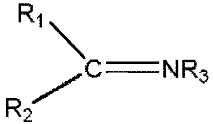 aufweist.

10. Lasttragendes Traktionselement nach Anspruch 8 oder 9, wobei die Zusammensetzung ferner eine Verbindung umfasst, die eine Vielzahl von Epoxid-Gruppen umfasst.

11. Lasttragendes Traktionselement nach Anspruch 10, wobei die Zusammensetzung 0,05-10,00 Gew.-% der Verbindung umfasst, die eine Vielzahl von Epoxid-Gruppen umfasst.

12. Lasttragendes Traktionselement nach einem der Ansprüche 8-11, wobei die Zusammensetzung ferner einen Katalysator umfasst.

13. Aufzugssystem, das das lasttragende Traktionselement nach einem der Ansprüche 8-12 umfasst.

## Revendications

1. Procédé de fabrication d'un élément de traction porteur de charge, comprenant
le chauffage d'une composition comprenant un polyuréthane thermoplastique, et un composé comprenant une pluralité de groupes de formule 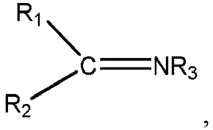 dans lequel R₁ et R₂ sont chacun des groupes dans un squelette polymère ou forment ensemble un groupe de formule =NR₄, dans lequel R₃ et R₄ représentent chacun indépendamment un groupe organique ; et
l'application de la composition à au moins un élément de tension et la solidification de la composition pour former une enveloppe polymère autour de l'au moins un élément de tension.

2. Procédé selon la revendication 1, dans lequel la composition comprend de 0,1 à 5,0 % en poids du composé comprenant une pluralité de groupes de formule

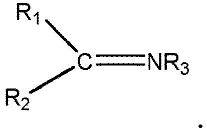

3. Procédé selon la revendication 1 ou la revendication 2, dans lequel la composition comprend en outre un composé comprenant une pluralité de groupes époxyde.

4. Procédé selon la revendication 3, dans lequel la composition comprend de 0,05 à 10,00 % en poids du composé comprenant une pluralité de groupes époxyde.

5. Procédé selon une quelconque revendication précédente, dans lequel la composition comprend en outre un catalyseur.

6. Procédé selon une quelconque revendication précédente, dans lequel la composition est chauffée à une température d'au moins 150 °C.

7. Procédé selon une quelconque revendication précédente, dans lequel la composition est chauffée à une température inférieure à 250 °C.

8. Élément de traction porteur de charge, comprenant un ou plusieurs éléments de tension ; et
une enveloppe polymère comprenant le produit de réaction d'une composition comprenant un polyuréthane thermoplastique et un composé comprenant une pluralité de groupes de formule 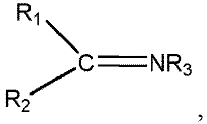 dans lequel R₁ et R₂ sont chacun des groupes dans un squelette polymère ou forment ensemble un groupe de formule =NR₄, dans lequel R₃ et R₄ représentent chacun indépendamment un groupe organique.

9. Élément de traction porteur de charge selon la revendication 8, dans lequel la composition comprend de 0,1 à 5,0 % en poids du composé comprenant une pluralité de groupes de formule

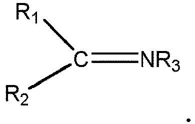

10. Élément de traction porteur de charge selon la revendication 8 ou la revendication 9, dans lequel la composition comprend en outre un composé comprenant une pluralité de groupes époxyde.

11. Élément de traction porteur de charge selon la revendication 10, dans lequel la composition comprend de 0,05 à 10,00 % en poids du composé comprenant une pluralité de groupes époxyde.

12. Élément de traction porteur de charge selon l'une quelconque des revendications 8 à 11, dans lequel la composition comprend en outre un catalyseur.

13. Système d'ascenseur comprenant l'élément de traction porteur de charge selon l'une quelconque des revendications 8 à 12.
